# EUROPÄISCHE PATENTSCHRIFT

(11) **EP 0 613 709 B1**
(45) Veröffentlichungstag und Bekanntmachung des Hinweises auf die Patenterteilung: **24.06.1998**
(21) Anmeldenummer: 94102181.8
(22) Anmeldetag: 12.02.1994
(51) Int. Cl.: B01D 25/172

(54) **Vorrichtung an Filterpressen zum Verschieben der jeweils vordersten Filterplatte**
Apparatus for moving the respective front filter plate in filter presses
Dispositif pour déplacer le plateau filtrant chaque fois avant dans des filtre-presses

(30) Priorität: 05.03.1993 DE 4306959; 29.05.1993 DE 4318009
(43) Veröffentlichungstag der Anmeldung: 07.09.1994
(73) Patentinhaber: RITTERSHAUS & BLECHER GMBH, 42369 Wuppertal (DE)
(72) Erfinder: Oelbermann, Max, D-42853 Remscheid (DE)
(74) Vertreter: Christl, Hermann, Dipl.-Ing.

(56) Entgegenhaltungen:
- DE-A- 1 919 471
- GB-A- 2 015 364
- GB-A- 2 047 109
- GB-A- 2 052 289
- GB-A- 2 101 003

## Beschreibung

Die Erfindung betrifft eine Vorrichtung an Filterpressen zum Verschieben der jeweils vordersten Filterplatte eines an oberen Führungsschienen hängenden Filterplattenpaketes, mit einem längs der Führungsschienen mittels eines Seilzuges hin- und herverfahrbaren Schlitten, der eine bei der Schlitten-Rückbewegung jeweils hinter die vorderste Filterplatte einrastende Mitnehmerklinke und einen bei der Schlitten-Rückbewegung jeweils gegen die vorderste Filterplatte gerichteten Fallhebel trägt, der mit seinem beweglichen Hebelende einen Anschlag der Mitnehmerklinke untergreift.

Eine derartige Verfahrvorrichtung für Filterplatten ist durch die DE 29 23 864 C2 bekannt. Dort nimmt die Mitnehmerklinke bei der Schlitten-Vorwärtsbewegung, d.h - beim Plattentransport, dieselbe Höhenlage ein wie bei der Schlitten-Rückbewegung zum Holen der nächsten Platte. Bei der Schlitten-Vorwärtsbewegung, speziell beim Abziehen der vordersten Filterplatte zwecks Kuchenauswurfs, müssen oft große Kräfte von der Mitnehmerklinke auf die Filterplatte ausgeübt werden.

Um diese großen Kräfte übertragen zu können und um ein Ausrasten der Mitnehmerklinke während des Plattentransportes zu verhindern, muß die Mitnehmerklinke verhältnismäßig tief die Filterplatte hintergreifen, was dort zur Folge hat, daß beim Holen der nächsten Filterplatte die an ihrer Unterseite als Auflauframpe ausgebildete Klinke einen verhältnismäßig weiten Schwenkweg zum überrasten der Filterplatte ausführen muß. Hierdurch ist bei der bekannten Vorrichtung die Geschwindigkeit der Rückwärtsbewegung, die an sich als Leerlaufbewegung viel rascher ausgeführt werden könnte, hierdurch beschränkt. Ferner sind bei der bekannten Vorrichtung gesonderte Rampen an den beiden Enden des Filterpressengestelles vorgesehen, um die Mitnehmerklinke und den Fallhebel in eine solche Lage umzusteuern, daß der Schlitten in seine Verwahrstellung am Filterpressengestell verfahren werden kann. Ein Verfahren in die Verwahrstellung ist dort zudem nur möglich, wenn zunächst alle Filterplatten des Stapels zu dem sich neu ausbildenden Filterplattenstapel verfahren worden sind.

Durch die DE-AS 1 288 073 ist ferner eine Filterplatten-Verfahrvorrichtung bekannt, bei der im Filterplattenpaket jede Filterplatte durch eine Verriegelungsklinke mit der nachfolgenden Filterplatte verriegelt ist . Die Verfahrvorrichtung umfaßt dort eine nur in einer Richtung umlaufende Gliederkette, an der eine Vielzahl von Mitnehmerklinken sitzen, von denen jeweils die an der vordersten Filterplatte angelangte Mitnehmerklinke zunächst deren Verriegelungsklinke löst und dann die Filterplatte zum sich neu bildenden Filterstapel transportiert. Diese bekannte Vorrichtung ist wegen der vielen Mitnehmerklinken sehr aufwendig und nicht für einen Einsatz bei Filterpressen geeignet, bei denen die einzelnen Filterplatten in eine spezielle Filterplatten-Waschposition geführt und dort sicher gehalten werden müssen.

Der Erfindung liegt die Aufgabe zugrunde, bei einer gattungsgemäßen Verfahrvorrichtung die Verschleißbeanspruchungen zu reduzieren und die Funktionssicherheit zu erhöhen, so daß die Arbeitsgeschwindigkeit gesteigert werden kann.

Die Lösung dieser Aufgabe ist erfindungsgemäß dadurch erreicht, daß am Schlitten ein mittels des Seilzuges um eine horizontale Achse zwischen zwei wagenfesten Anschlägen schwenkbarer und den Fallhebel untergreifender Steuerhebel gelagert ist, welcher den Fallhebel und die auf diesem aufliegende Mitnehmerklinke zwischen einer Tiefstellung während des Plattentransportes und einer Hochstellung während der Schlitten-Rückbewegung umsteuert, wobei auch in der Hochstellung die Mitnehmerklinke und der Fallhebel noch in die Bewegungsbahn der Filterplatten eingreifen.

Durch diese Maßnahmen wird zum einen sichergestellt, daß die Mitnehmerklinke die Filterplatte beim Transport tief hintergreift und daß zum anderen bei der Schlitten-Rückbewegung die Mitnehmerklinke vorab in eine Hochstellung gebracht ist, so daß sie beim überrasten der zu greifenden nächsten Filterplatte nur noch um eine verhältnismäßig kurze überrasthöhe geschwenkt wird. Wenn nach dem Einrasten der Mitnehmerklinke die Seilzugrichtung umgeschaltet wird, gibt der Steuerhebel sofort den Fallhebel und die Mitnehmerklinke frei, so daß diese in die tiefe Eingriffsstellung fallen, die sie während des Plattent ransportes beibehalten. Die Umsteuerungen von Mitnehmerklinke und Fallhebel erfolgen bei der Erfindung mit höchster Funktionssicherheit und in kürzesten Zeiten. Zudem ist bei der Vorrichtung nach der Erfindung die Verschleißbeanspruchung erheblich gesenkt.

In Ausgestaltung der Erfindung kann ferner vorgesehen werden, daß der auf den beim Plattentransport sich neu bildenden Filterplattenstapel auflaufende Fallhebel die auf ihm aufliegende Mitnehmerklinke bis in eine Höchststellung anhebt, in der die Mitnehmerklinke oberhalb der Bewegungsbahn der Filterplatten liegt. Hierdurch ist es möglich, die Filterplattenumschichtung jederzeit zu unterbrechen und den Schlitten zusammen mit Fallhebel und Mitnehmerklinke in die Verwahrstellung zu verfahren. Die Überführung der Mitnehmerklinke in die Höchststellung wird ausschließlich durch am Schlitten angeordnete Bauteile und den sich neu bildenden Filterplattenstapel bewirkt, so daß besondere, am Filterpressengestell angebrachte Steuereinrichtungen hierfür nicht mehr erforderlich sind.

Gemäß einer bevorzugten Ausführungsform der Erfindung kann vorgesehen werden, daß im Filterplattenpaket jede Filterplatte durch eine Verriegelungsklinke mit der nachfolgenden Filterplatte verriegelt ist und daß die Verriegelungsklinke der jeweils vordersten Filterplatte durch die Mitnehmerklinke entriegelbar ist. Damit die Mitnehmerklinke und der Fallhebel ihre verschiedenen Funktionen zuverlässig ausführen können, sind die schlittenfesten Anschläge für den Steuerhebel und der an der Mitnehmerklinke vorgesehene Anschlag für den Fallhebel einstellbar. Damit sind die Relativlage von Mitnehmerklinke und Fallhebel sowie deren gemeinsame Hochstellung, ihre gemeinsame Tiefstellung und ihre überfahrstellung für ein überfahren des gesamten Filterplattenpaketes - unter Berücksichtigung der von der Mitnehmerklinke noch auszuführenden Entriegelungsarbeiten - an bauliche Toleranzen anpassbar.

Weitere Merkmale der Erfindung sind in den Unteransprüchen angegeben und in Verbindung mit der Figurenbeschreibung näher erläutert.

Der Gegenstand der Erfindung wird im folgenden anhand eines in der Zeichnung dargestellten Ausführungsbeispieles näher beschrieben. In der Zeichnung zeigen:
- Fig. 1: eine mit einer Filterplatten-Verfahrvorrichtung nach der Erfindung ausgerüstete Filterpresse,
- Fig. 2: in vergrößertem Maßstab die Verfahrvorrichtung, in Fig. 3 aus der Ebene II-II gesehen,
- Fig. 3: eine Stirnansicht auf die Verfahrvorrichtung, in Fig. 2 in Richtung des Pfeiles III gesehen,
- Fig. 4: in perspektivischer Darstellung einen filterplattenseitigen Lagerbock, an dem die Verfahrvorrichtung angreift,
- Fig. 5: in einer perspektivischen Darstellung eine Verriegelungsklinke zur Verriegelung aufeinanderfolgender Filterplatten im Filterplattenpaket und
- Fig. 6 bis 12: in schematischer Darstellung sieben verschiedene Stellungen der Verfahrvorrichtung.

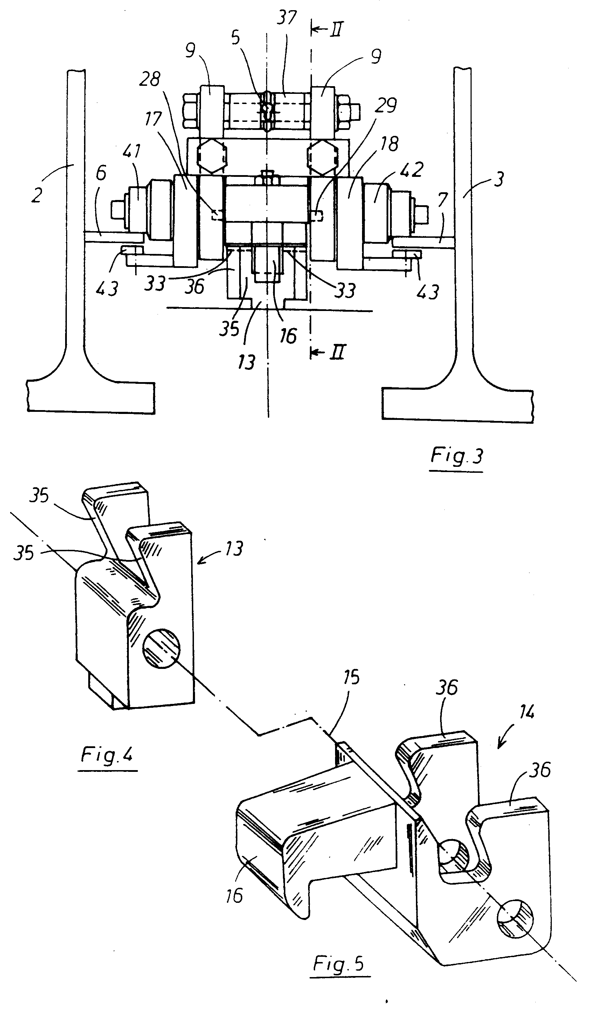

Die Filterpresse ist mit einer Vorrichtung zum Verfahren, im allgemeinen zwecks Filterkuchenauswurfes oder zum Waschen, der jeweils vordersten Filterplatte 1 eines an oberen Führungsschienen 2, 3 hängenden Filterplattenpaketes 4 versehen. Die Verfahrvorrichtung weist einen längs der Führungsschienen 2, 3 mittels eines umlaufenden Seilzuges 5 hin und her auf Laufschienen 6, 7 verfahrbaren Schlitten 8 auf, auf dem ein Steuerhebel 9 um eine horizontale Achse 10 schwenkbar gelagert ist, an dessen nach oben gerichteten Arm 11 der Seilzug 5 beidseits angeschlossen ist. Alle Filterplatten sind an der Oberseite ihrer Aufhängetraverse 12 mit einem Lagerbock 13 (vgl. auch Fig. 4) ausgerüstet, an dem eine Verriegelungsklinke 14 (vgl. auch Fig. 5) um eine horizontale Achse 15 schwenkbar gelagert ist, die mit ihrer Klinkennase 16 jeweils den Lagerbock 13 der nachfolgenden benachbarten Filterplatte hintergreift, so daß die Filterplatten des Filterplattenpaketes insgesamt untereinander verrieglt sind.

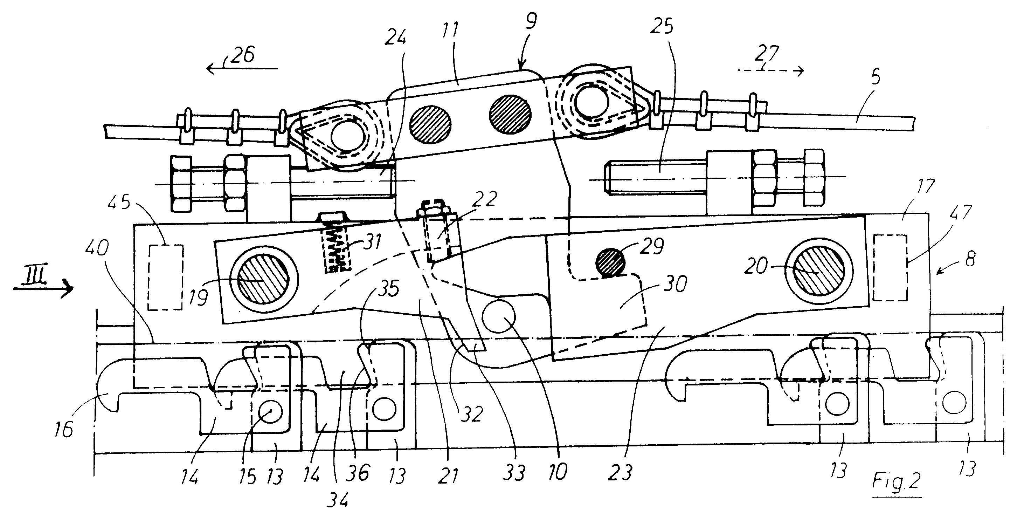

Wie aus den Fig. 2 und 3 ersichtlich ist, umfaßt der Schlitten 8 zwei Seitenwangen 17, 18, die über Bolzen 19, 20 starr miteinander verbunden sind. Auf dem Bolzen 19 ist eine Mitnehmerklinke 21 gelagert, die mit einem Anschlag 22 auf einer vorderen Nase eines Fallhebels 23 aufliegt, der um den Bolzen 20 schwenkbar gelagert ist. Der Anschlag 22 ist als verstellbare Schraube ausgebildet. Der Steuerhebel 9 ist zwischen zwei schlittenseitigen Anschlägen 24, 25 schwenkbar, bei denen es sich ebenfalls um Einstellschrauben handelt. In der in Fig. 2 gezeigten Stellung, in der der Seilzug 5 auf eine Rückbewegung des Schlittens 8 in Richtung des Pfeiles 26 gerichtet ist, liegt der Steuerhebel 9 am Anschlag 24 an. Bei einer Umkehr der Seilzugrichtung in Richtung des hier gestrichelt dargestellten Pfeiles 27 schwenkt der Steuerhebel 9 gegen den Anschlag 25. Der Fallhebel 23 ist beidseits mit abstehenden Nocken 28, 29 versehen, die auf einem abgewinkelten Arm 30 der doppelt vorgesehenen Steuerhebel 9 (vgl. Fig. 3) aufliegen, die den Fallhebel 23 zwischen sich einfassen.

Beim gezeigten Ausführungsbeispiel ist die Klinke 21 durch eine am Schlitten 8 sich abstützende Druckfeder 31 belastet und liegt normalerweise auf dem Fallhebel 23 auf.

Bei der Stellung nach Fig. 2 befindet sich die Klinke 21 in ihrer Hochstellung, in der jedoch ihre mit einer Auflauframpe 32 versehenen, gegabelten Klinkennasen 33 noch in die Bewegungsbahn 40 der Filterplatten bzw. deren Lagerböcke 13 hineinragen. Bei einer weiteren Rückbewegung des Schlittens 8 in Richtung des Pfeiles 26 rastet die Klinkennase 33 über den Lagerbock 13 der vordersten Filterplatte 1 und gelangt in den Rastsitzraum 34 und hintergreift dann den Lagerbock 13 und die Klinke 14.

Wie die Fig. 4 und 5 zeigen, ist der Lagerbock 13 in zwei Rastwangen 35 gegabelt. Die Klinke 14 ist an ihrem Lagerende ebenfalls in zwei Steuer-Wangen 36 gegabelt, die den Lagerbock 13 zwischen sich einfassen. Bei in Verriegelungsstellung befindlicher Klinke 14 liegen die Steuer-Wangen 36 etwas vor den Rast-Wangen 35 des Lagerbockes 13, so daß die Klinkennasen 33 zunächst die Verriegelungsklinke 14 in eine Entriegelungsstellung schwenken, ehe sie auf die Rast-Wangen 35 des Lagerbockes 13 auftreffen und die vorderste Filterplatte vom Filterplattenpaket abziehen. Diese Art der Verriegelung der Filterplatten und ihre Entriegelung über eine Mitnehmerklinke ist an sich bekannt und in der DE-AS 1 288 073 detailliert beschrieben.

Die beiden Steuerhebel 9 sind über eine Traverse 37 verbunden, an der der Seilzug 5 mittig angeschlossen ist. Der Seilzug ist mit einer überlastsicherung ausgerüstet, wozu dessen nicht angetriebene Umlenkrolle 38 durch eine die Seilzugspannung bestimmende Feder 39 belastet ist. Wie aus Fig. 3 noch ersichtlich ist, ist der Schlitten 8 kippsicher an den Laufschienen 6, 7 geführt, die jeweils zwischen Rädern 41, 42 und einstellbaren Bremsen 43 eingefaßt sind.

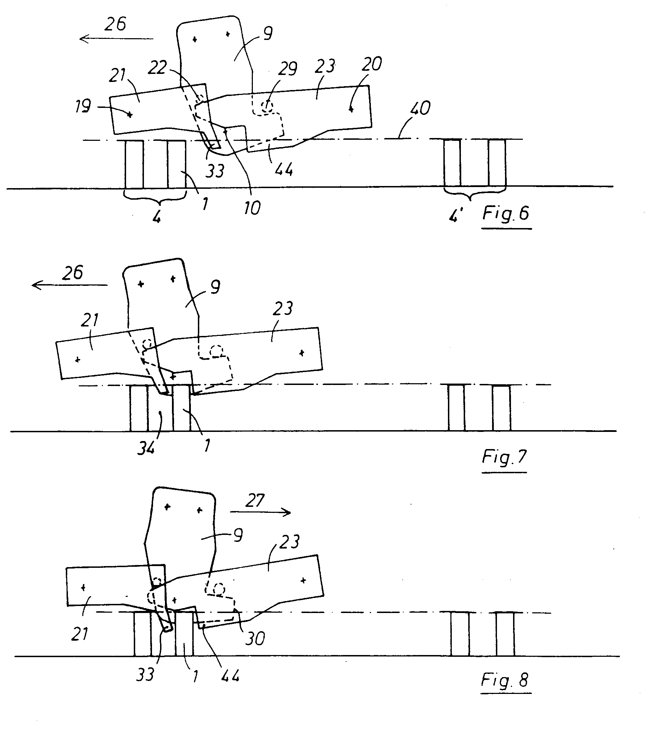

Die Arbeitsweise der Verfahrvorrichtung wird im folgenden anhand der Fig. 6 bis 12 näher erläutert.

Fig. 6 veranschaulicht schematisch die Verfahrvorrichtung in der in Fig. 2 gezeigten Stellung, in der der Schlitten 8 eine Rückbewegung in Richtung des Pfeiles 26 ausführt, um die nächste Filterplatte 1 vom Filterplattenpaket 4 zu holen. Der Fallhebel 23 und die Mitnehmerklinke 21 sind in ihrer Hochstellung, in der jedoch die Klinkennase 33 und eine am Fallhebel 23 vorgesehene Anschlagnase 44 noch in die Bewegungsbahn 40 der Filterplatten hineinragen. Am Ende der Rückwärtsbewegung steigt die Mitnehmerklinke 21 in eine Überraststellung und fällt dann in den Rastsitzraum 34

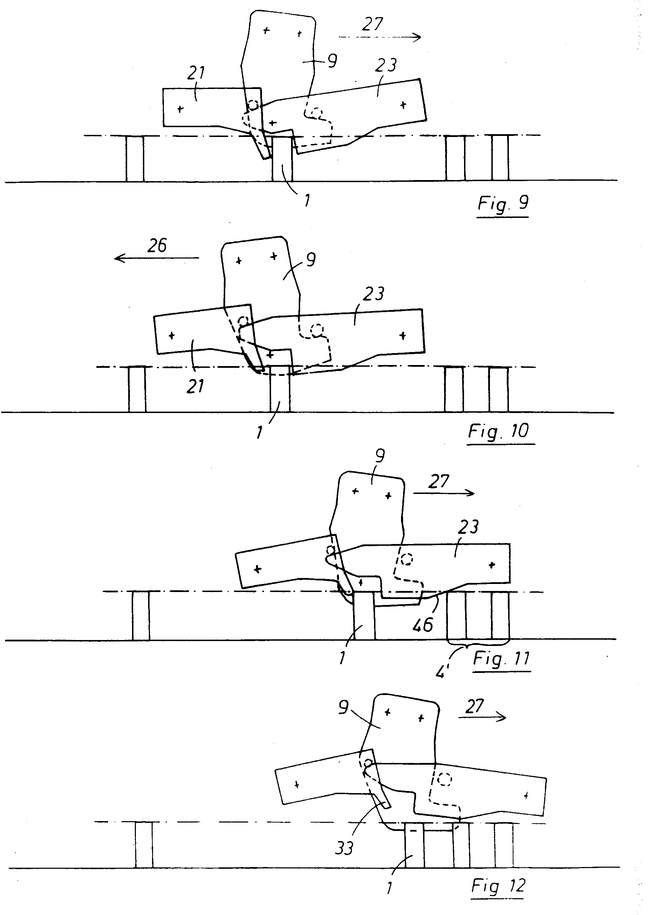

Die Schlitten-Rückbewegung wird durch einen Näherungsschalter 45 (vgl. Fig. 2) erfaßt und in der Stellung nach Fig. 7 gestoppt. Bei Umschaltung der Seilzugrichtung in Richtung des Pfeiles 27 (vgl. Fig. 8) wird der Steuerhebel 9 sofort in seine andere Anschlagstellung geschwenkt, in der sein abgewinkelter Arm 30 nach unten geschwenkt ist, so daß der Fallhebel 23 und die Mitnehmerklinke 21 in ihre in Fig. 8 gezeigte Tiefstellung fallen, in der ihre Nasen 33, 44 die Filterplatte 1, bzw. deren Lagerbock 13, tief hintergreifen. Die Eingriffstiefe ist hier um ein Mehrfaches größer als bei der Hochstellung. Während des anschließenden Plattentransportes bleibt dieser tiefe Eingriff erhalten (vgl. Fig. 9). Wenn die Filterplatte in einer Zwischenstellung, z. B. für einen Waschvorgang, angehalten werden muß, wird der Seilzug 5 abgeschaltet bzw. zwecks Feinpositionierung wieder in Richtung des Pfeiles 26 gerichtet, wobei die Mitnehmerklinke 21 und der Fallhebel 23 wieder durch die Umsteuerung des Steuerhebels 9 in die Hochstellung gelangen (vgl. Fig. 10), in der sie jedoch die Filterplatte 1 nach wie vor noch beidseitig einfassen und an einem Auswandern aus der Soll-Position hindern.

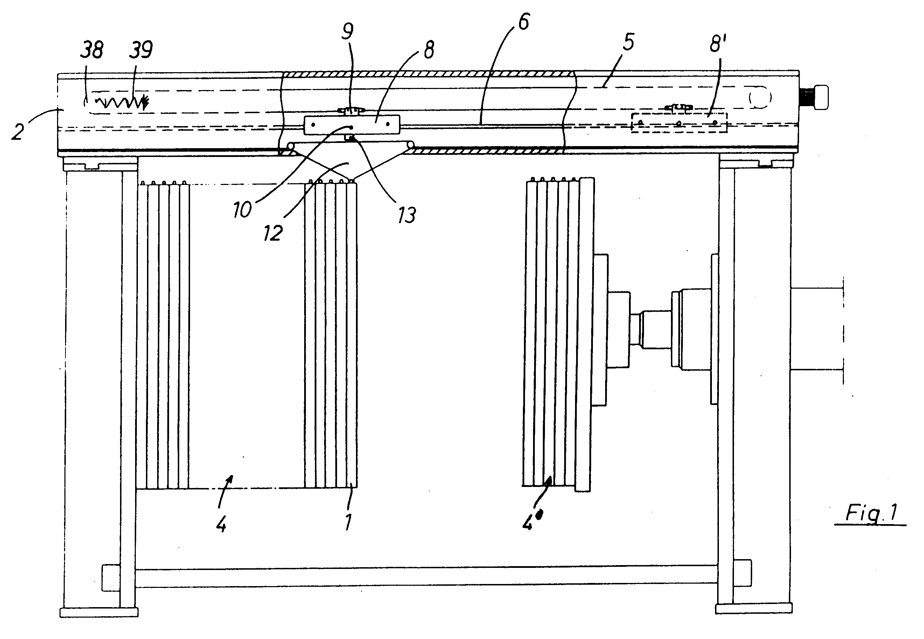

Bei einer Fortsetzung des Filterplattentransportes trifft der Fallhebel 23 mit einer unteren Auflauframpe 46 auf die Filterplatten des sich neu bildenden Filterplattenpaketes 4' auf, wobei der Fallhebel 23 die Mitnehmerklinke 21 jedesmal am Ende eines Filterplattentransportes so hoch hebt, daß dessen Mitnehmernase 33 oberhalb der Bewegungsbahn 40 liegt. Die Bewegung des Schlittens 8 in Filterplatten-Transportrichtung 27 wird durch einen Näherungsschalter 47 (vgl. Fig. 2) erfaßt, welcher normalerweise in der Stellung nach Fig. 12 eine Umschaltung der Seilzugrichtung auslöst, wonach sich der beschriebene Arbeitsablauf wiederholt. Soll aber zu irgendeinem Zeitpunkt der Schlitten 8 in seine Verwahrstellung 8' (vgl. Fig. 1) geführt werden, ist dies jederzeit möglich.

### Bezugszeichenliste

- 1: Filterplatte
- 2: Führungsschiene
- 3: Führungsschiene
- 4: Filterplattenpaket
- 5: Seilzug
- 6: Laufschiene
- 7: Laufschiene
- 8: Schlitten
- 9: Steuerhebel
- 10: Achse
- 11: Arm Von 9
- 12: Aufhängetraverse
- 13: Lagerbock
- 14: Verriegelungsklinke
- 15: Achse
- 16: Klinkennase von 14
- 17: Seitenwange
- 18: Seitenwange
- 19: Bolzen
- 20: Bolzen
- 21: Mitnehmerklinke
- 22: Anschlag
- 23: Fallhebel
- 24: Anschlag
- 25: Anschlag
- 26: Pfeil (Rückbewegung)
- 27: Pfeil (Vorwärtsbewegung)
- 28: Nocken
- 29: Nocken
- 30: abgewinkelter Arm von 9
- 31: Druckfeder
- 32: Auflauframpe an 33
- 33: Klinkennasen von 21
- 34: Rastsitzraum
- 35: Rast-Wangen
- 36: Steuer-Wangen
- 37: Traverse
- 38: Umlenkrolle
- 39: Feder
- 40: Bewegungsbahn
- 41: Räder
- 42: Räder
- 43: Bremsen
- 44: Anschlagnase
- 45: Näherungsschalter
- 46: Auflauframpe
- 47: Näherungsschalter
- 4': Filterplattenpaket
- 8': Verwahrstellung

## Patentansprüche

1. Vorrichtung an Filterpressen zum Verschieben der jeweils vordersten Filterplatte (1) eines an oberen Führungsschienen (2, 3) hängenden Filterplattenpaketes (4), mit einem längs der Führungsschienen (2, 3) mittels eines Seilzuges (5) hin- und herverfahrbaren Schlitten (8), der eine bei der Schlitten-Rückbewegung jeweils hinter die vorderste Filterplatte (1) einrastende Mitnehmerklinke (21) und einen bei der Schlitten-Rückbewegung jeweils gegen die vorderste Filterplatte gerichteten Fallhebel (23) trägt, der mit seinem beweglichen Hebelende einen Anschlag (22) der Mitnehmerklinke (21) untergreift, dadurch gekennzeichnet, daß am Schlitten (8) ein mittels des Seilzuges (5) um eine horizontale Achse (10) zwischen zwei wagen festen Anschlägen (24, 25) schwenkbarer und den Fallhebel (23) untergreifender Steuerhebel (9) gelagert ist, welcher den Fallhebel (23) und die auf diesem aufliegende Mitnehmerklinke (21) zwischen einer Tiefstellung während des Plattent ransportes und einer Hochstellung während der Schlitten-Rückbewegung umsteuert, wobei auch in der Hochstellung die Mitnehmerklinke (21) und der Fallhebel (23) noch in die Bewegungsbahn (40) der Filterplatten (1) eingreifen.

2. Vorrichtung nach Anspruch 1, dadurch gekennzeichnet, daß der auf den beim Plattentransport sich neu bildenden Filterplattenstapel (4') auflaufende Fallhebel (23) die auf ihm aufliegende Mitnehmerklinke (21) bis in eine Höchststellung anhebt, in der die Mitnehmerklinke (21) oberhalb der Bewegungsbahn (40) der Filterplatten (1) liegt.

3. Vorrichtung nach den Ansprüchen 1 und 2, dadurch gekennzeichnet, daß im Filterplattenpaket (4) jede Filterplatte (1) durch eine Verriegelungsklinke (14) mit der nachfolgenden Filterplatte verriegelt ist und daß die Verriegelungsklinke (14) der jeweils vordersten Filterplatte durch die Mitnehmerklinke (21) entriegelbar ist.

4. Vorrichtung nach den Ansprüchen 1 bis 3, dadurch gekennzeichnet, daß die schlittenfesten Anschläge (24, 25) für den Steuerhebel (9) und der an der Mitnehmerklinke (21) vorgesehene Anschlag (22) für den Fallhebel (23) einstellbar sind.

5. Vorrichtung nach den Ansprüchen 1 bis 4, dadurch gekennzeichnet, daß die Mitnehmerklinke (21) durch eine Feder (31) in Richtung auf den Fallhebel (23) belastet ist.

6. Vorrichtung nach den Ansprüchen 1 bis 5, dadurch gekennzeichnet, daß der Schlitten (8) auf an den Führungsschienen (2, 3) angebrachten Laufschienen (6, 7) kippsicher geführt und mit einer einstellbaren Bremse (43) ausgerüstet ist.

7. Vorrichtung nach den Ansprüchen 1 bis 6, dadurch gekennzeichnet, daß zwei gleichartige Steuerhebel (9) vorgesehen sind, die den Fallhebel (23) zwischen sich einfassen und jeweils mit einem abgewinkelten Arm (30) einen vom Fallhebel (23) abragenden Nocken (28, 29) untergreifen.

8. Vorrichtung nach den Ansprüchen 1 bis 7, dadurch gekennzeichnet, daß die beiden Steuerhebel (9) über eine Traverse (37) verbunden sind, an der der Seilzug (5) mittig angeschlossen ist.

9. Vorrichtung nach den Ansprüchen 1 bis 8, dadurch gekennzeichnet, daß ein umlaufender Seilzug (5) verwendet ist, der mit einer überlastsicherung ausgerüstet ist.

10. Vorrichtung nach Anspruch 9, dadurch gekennzeichnet, daß die nicht angetriebene Umlenkrolle (38) des Seilzuges (5) durch eine die Seilzugspannung bestimmende Feder (39) belastet ist.

## Claims

1. A device on filter presses for moving each front filter plate (1) in a stack (4) of filter plates suspended from upper guide rails (2, 3), the device comprising a slide (8) which is movable in reciprocation by a cable (5) along the guide rails (2, 3) and carries a drive paw (21) which engages behind the front filter plate (1) during each return movement of the slide and also bears a drop lever (23) which is directed against the front filter plate at each return movement of the slide and has a movable end which extends under an abutment (22) on the drive pawl (21), characterised in that a control lever (9) grips under the drop lever (23) and is pivotable by the cable (5) around a horizontal axis (10) between two abutments (24, 25) secured to the slide (8) and guides the drop lever (23) and the drive paw (21) resting on it between a low position during conveyance of the plates and a high position during the return movement of the slide, and even in the high position the drive paw (21) and the drop lever (23) still engage in the path (40) of motion of the filter plates (1).

2. A device according to claim 1, characterised in that the drop lever (23) running on to the newly-forming stack (4') of filter plates during conveyance thereof raises the drive pawl (21) resting on it, up to a high position in which the drive paw (21) lies above the path (40) of the filter plates (1).

3. A device according to claims 1 and claim 2, characterised in that in the stack (4) of filter plates, each filter plate (1) is locked by a locking paw (14) to the next filter plate, and the locking paw (14) of each front filter plate is unlockable by the drive paw (21).

4. A device according to claims 1 to 3, characterised in that the abutments (24, 25) secured to the slide are adjustable for the control lever (9) and the abutment (22) on the drive pawl (21) is adjustable for the drop lever (23).

5. A device according to claims 1 to 4, characterised in that the drive pawl (21) is biased by a spring (31) in the direction towards the drop lever (23).

6. A device according to claims 1 to 5, characterised in that the slide (8) is guided in non-tiltable manner on rails (6, 7) attached to the guide rails (2, 3) and is equipped with an adjustable brake (43).

7. A device according to claims 1 to 6, characterised in that two similar control levers (9) are provided and grip the drop lever (23) between them and each have a bent arm (30) which grips under a cam (28, 29) projecting from the drop lever (23).

8. A device according to claims 1 to 7, characterised in that the two control levers (9) are connected by a cross-member (37) to which the cable (5) is attached in the middle.

9. A device according to claims 1 to 8, characterised in that a rotating cable (5) is used and is equipped with an overload safety device.

10. A device according to claim 9, characterised in that the non-driven guide pulley (38) of the cable (5) is biased by a spring (39) which determines the cable tension.

## Revendications

1. Dispositif pour filtres-presses, servant à faire coulisser le plateau de filtre (1) respectivement le plus en avant d'un paquet de plateaux de filtres (4) suspendu sur des rails de guidage supérieurs (2, 3), avec un chariot (8) que l'on peut faire aller et venir le long de rails de guidage (2, 3) au moyen d'un câble de traction (5), chariot qui porte un cliquet d'entraînement (21) venant en prise derrière le plateau de filtre le plus en avant (1) lors du mouvement en arrière du chariot, et un levier de retenue (23) qui est orienté vers le plateau de filtre respectivement le plus en avant lors du mouvement en arrière du chariot, levier de retenue qui vient en prise, par son extrémité mobile, derrière une butée (22) du cliquet d'entraînement (21),
caractérisé en ce qu*'*
on monte sur le chariot (8) un levier de commande (9) qui peut pivoter au moyen du câble de traction (5) autour d'un axe horizontal (10), entre deux butées solidaires des joues (24, 25) et qui vient en prise par derrière avec le levier de retenue (23), levier de commande (9) qui renverse la commande du levier de retenue (23) et du cliquet d'entraînement (21), reposant sur celui-ci, entre une position basse pendant le transport du plateau et une position haute pendant le mouvement en arrière du plateau, le cliquet d'entraînement (21) et le levier de retenue (23), même dans la position haute, venant encore en prise sur la trajectoire (40) des plateaux de filtres (1).

2. Dispositif selon la revendication 1,
caractérisé en ce que
le levier de retenue (23) qui, lors du transport des plateaux, circule sur l'empilement (4') de plateaux de filtres qui se forme à nouveau, soulève le cliquet d'entraînement (21) reposant dessus, jusque dans la position la plus haute dans laquelle le cliquet d'entraînement (21) se trouve au-dessus de la trajectoire (40) des plateaux de filtres (1).

3. Dispositif selon les revendications 1 et 2,
caractérisé en ce que
• dans le paquet de plateaux de filtres (4), chaque plateau de filtre (1) est verrouillé par un cliquet de verrouillage (14) avec le plateau de filtre suivant, et
• le cliquet de verrouillage (14) du plateau de filtre respectivement le plus en avant peut être verrouillé par le cliquet d'entraînement (21).

4. Dispositif selon les revendications 1 à 3,
caractérisé en ce que
les butées solidaires du chariot (24, 25) peuvent être réglées pour le levier de commande (9) et la butée (22) prévue sur le cliquet d'entraînement (21) peut être réglée pour le levier de retenue (23).

5. Dispositif selon les revendications 1 à 4,
caractérisé en ce que
le cliquet d'entraînement (21) est comprimé par un ressort (31) en direction du levier de retenue (23).

6. Dispositif selon les revendications 1 à 5,
caractérisé en ce que
le chariot (8) passe sans pouvoir basculer sur des rails de circulation (6, 7) qui sont mis sur les rails de guidage (2, 3), et est équipé d'un frein réglable (43).

7. Dispositif selon les revendications 1 à 6,
caractérisé en ce qu*'*
il est prévu deux leviers de commande identiques (9) qui enserrent entre eux le levier de retenue (23) et viennent en prise par derrière et par un bras (30) coudé à angle droit, avec une came (28, 29) qui fait saillie à partir du levier de retenue (23).

8. Dispositif selon les revendications 1 à 7,
caractérisé en ce que
les deux leviers de commande (9) sont reliés au moyen d'une traverse (37), au milieu de laquelle est raccordé le câble de traction (5).

9. Dispositif selon les revendications 1 à 8,
caractérisé en ce qu*'*
on utilise un câble de traction qui fait tout le tour (5), et qui est équipé d'une sécurité contre les surcharges.

10. Dispositif selon la revendication 9,
caractérisé en ce que
le galet de renvoi (38) non entraîné, du câble de traction (5) est comprimé par un ressort (39) qui détermine la tension du câble de traction.
